Europäisches Patentamt

(19) European Patent Office

Office européen des brevets

(11) Numéro de publication: **0 225 200**
**B1**

(12) **FASCICULE DE BREVET EUROPEEN**

(45) Date de publication du fascicule du brevet:
21.03.90

(21) Numéro de dépôt: 86402128.2

(22) Date de dépôt: 29.09.86

(51) Int. Cl.⁴: **H05B 7/00, H02M 7/17**

(54) **Dispositif d'alimentation en courant continu d'au moins deux charges électriques ayant une polarité commune, en particulier pour l'alimentation d'arcs électriques multiples.**

(30) Priorité: 04.10.85 FR 8514714

(43) Date de publication de la demande:
10.06.87 Bulletin 87/24

(45) Mention de la délivrance du brevet:
21.03.90 Bulletin 90/12

(84) Etats contractants désignés:
AT BE CH DE FR GB IT LI NL SE

(56) Documents cités:
DE-A- 1 163 996
FR-A- 2 168 430
FR-A- 2 404 334

ELEKTROWÄRME INTERNATIONAL,
vol. 41, no. 4, août 1983, pages 176-180, Essen DE;
W.REINHARD et al.: "Die Stromversorgung des ersten
Gleichstrom-Lichtbogenofens"
PATENTS ABSTRACTS OF JAPAN
vol. 9, no. 169 (E-328)[1892], 13 juillet 1985; &
JP-A-60 43 075 (ISAO TAKAHASHI) 07-03-1985

(73) Titulaire: JEUMONT-SCHNEIDER Société anonyme dite:,
31-32, Quai de Dion Bouton, F-92811 Puteaux Cedex(FR)

(72) Inventeur: Boisdon, Claude, 13 Résidence Bernard
Palissy, F-77210 Avon(FR)

(74) Mandataire: Phélip, Bruno et al, c/o Cabinet Harlé &
Phélip 21, rue de La Rochefoucauld, F-75009 Paris(FR)

# Description

La présente invention concerne un dispositif d'alimentation en courant continu d'au moins deux charges électriques ayant une polarité commune, applicable plus particulièrement aux fours à arcs et aux générateurs de plasmas.

On sait qu'il est avantageux d'alimenter en courant continu certaines charges électriques, et notamment les arcs qui sont utilisés dans les fours à arcs ou les générateurs de plasmas. On obtient en effet une moindre consommation d'électrodes et un fonctionnement plus stable vis-à-vis du réseau.

Ces charges sont souvent multiples et à fonctionnement simultané, comme dans le cas d'un four à arc à plusieurs électrodes. De plus, un point équipotentiel commun est fréquemment imposé sur une polarité, soit du fait du fonctionnement, ce qui est le cas du bain d'un four à arc, soit pour des raisons de sécurité d'emploi comme dans le cas des torches à plasmas.

A l'heure actuelle, la plupart des installations de ce type sont alimentées en alternatif. Il est donc avantageux, soit de réutiliser le transformateur alternatif existant dans le cas d'une modernisation, soit d'utiliser un réseau ou un transformateur commun d'alimentation alternative dans le cas d'une installation neuve, tout en conservant la possibilité de réaliser une conversion électronique individuelle et un contrôle individuel des tensions et courants appliqués à chaque charge.

Le brevet JP 6 043 073 est relatif à un dispositif d'alimentation en courant continu d'une charge unique. Ce dispositif comporte un ensemble de redresseurs contrôlés, disposé en pont de Graetz, en parallèle sur une alimentation alternative commune, les demi-ponts situés du côté de la polarité commune ayant une tension commune de commande de déphasage.

Le dispositif d'alimentation décrit dans ce brevet a pour principal objectif de réduire la consommation d'énergie réactive. Il ne comporte qu'une seule ligne de sortie continue et ne peut donc convenir à l'alimentation de plusieurs charges électriques.

La présente invention a pour but de répondre aux critères précédents et, pour ce faire, elle a pour objet un dispositif d'alimentation qui se caractérise en ce qu'il alimente au moins deux charges ayant une polarité commune et en ce qu'il comprend un ensemble de redresseurs contrôlés par charge, les demi-ponts situés du côté opposé au côté de la polarité commune étant commandés chacun par une régulation individuelle.

Il est ainsi possible, comme on le verra plus clairement par la suite, de réduire les inter-réactions entre les différents ponts et d'équilibrer statiquement et dynamiquement les courants, tout en réalisant les protections nécessaires.

Selon un premier mode de réalisation de l'invention, la tension commune de commande de déphasage est normalement constante et ne varie qu'au-delà d'un seuil d'intensité prédéterminé.

Selon une variante, la tension commune de commande de déphasage est calculée à partir des tensions de commande des autres demi-ponts.

Selon une autre variante, la tension commune de commande de déphasage est calculée en fonction de l'écart entre la demi-référence de tension de la charge et la tension redressée commune mesurée en sortie des demi-ponts côté polarité commune.

Ainsi, il peut s'agir de la moyenne des tensions de commande des autres demi-ponts, ou bien du signal issu d'un asservissement de tension dont la référence est la moitié de la tension d'arc.

Bien entendu, au-delà d'un seuil limite d'intensité, le déphasage des demi-ponts côté polarité commune est également augmenté, afin de maîtriser le courant de court-circuit.

Avantageusement, une self de lissage est placée en série avec chacun des demi-ponts côté polarité commune, ce qui permet de renforcer l'équilibrage dynamique.

De préférence également, une chute de tension individuelle proportionnelle à l'intensité, est prévue dans chacun des demi-ponts côté polarité commune, afin d'accroître encore l'effet d'equilibrage dynamique.

Plusieurs formes d'exécution de l'invention sont décrites ci-après à titre d'exemples, en référence aux dessins annexés dans lesquels:

– la figure 1 est un schéma d'un dispositif d'alimentation conforme à l'invention, dans son application particulière à un four à arc à trois électrodes mobiles,
– la figure 2 est un schéma d'un circuit de commande de ce dispositif d'alimentation,
– la figure 3 est un schéma d'une variante de ce cicuit de commande, et
– la figure 4 et un schéma d'une autre variante du circuit de commande.

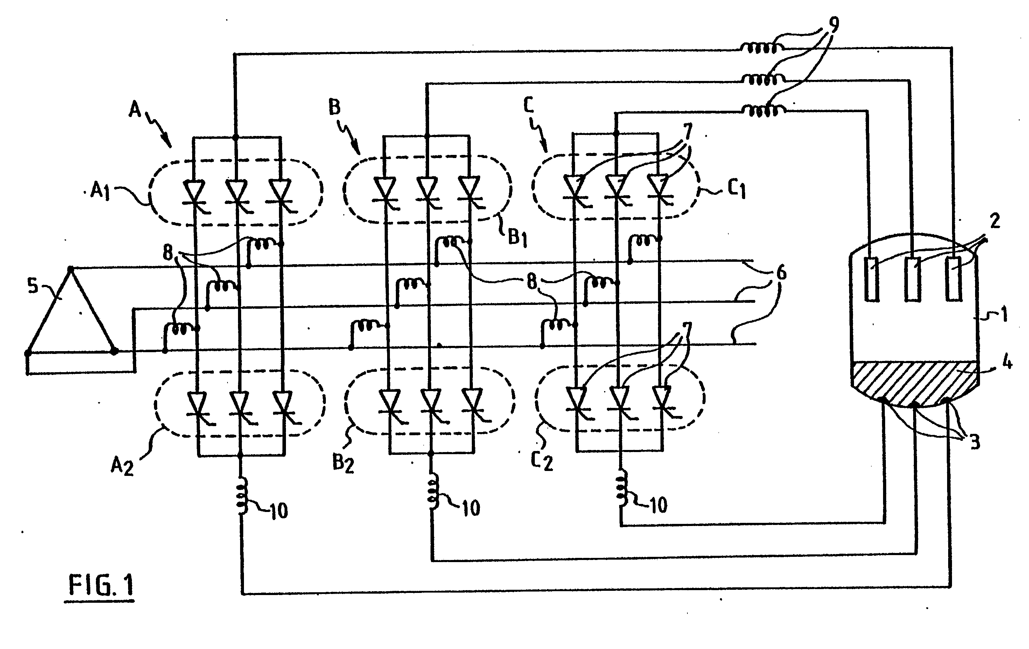

Le dispositif d'alimentation représenté sur la figure 1 est conçu pour alimenter en courant continu un four à arc électrique 1 comportant trois électrodes mobiles 2. Dans l'exemple représenté, le four 1 comporte également trois électrodes de sole 3, mais qui sont à la même polarité par l'intermédiaire du bain de fusion 4. Tout se passe donc comme s'il n'y avait qu'une seule électrode de sole.

L'alimentation se fait à partir d'un transformateur alternatif triphasé dont le secondaire 5, par exemple en triangle, est relié à un jeu de barres 6. Chacune des électrodes mobiles 2 du four 1 est alimentée par un convertisseur formé d'un ensemble ou groupe de redresseurs contrôlés, constitués ici par des thyristors 7, disposés en pont de GRAETZ, respectivement A, B et C. Il y a ainsi un demi-pont de trois thyristors, ou ensemble de thyristors en parallèle respectivement $A_1$, $B_1$ et $C_1$, du côté des électrodes mobiles, et un demi-pont de trois thyristors ou ensemble de thyristors en parallèle respectivement $A_2$, $B_2$ et $C_2$ du côté des électrodes de sole.

Les trois ponts de thyristors A, B, C, sont connectés en parallèle sur le jeu de barres 6 de l'alimentation alternative commune par l'intermédiaire de selfs de découplage 8. De façon connue en soi, une self de lissage 9 est placée en série entre chacun des demi-ponts $A_1$, $B_1$, $C_1$ et l'électrode mobile 2 correspondante. Par ailleurs, une self de lissage additionnelle 10 est avantageusement placée en série entre chacun des demi-ponts $A_2$, $B_2$, $C_2$ et l'électrode de sole 3 correspondante.

Conformément à l'invention, le déphasage et la commande des thyristors des demi-ponts $A_1$, $B_1$, $C_1$ sont dissociés de ceux des demi-ponts $A_2$, $B_2$, $C_2$. Les demi-ponts $A_1$, $B_1$, $C_1$ ont des angles de déphasage indépendants et sont commandés chacun par une régulation individuelle, tandis que les demi-ponts $A_2$, $B_2$, $C_2$ ont une tension commune de commande de déphasage.

Ainsi, les demi-ponts $A_1$, $B_1$, $C_1$ ont un fonctionnement indépendant et sont en régime redresseur ou onduleur selon les variations de la tension d'arc. En régime onduleur, leur angle de déphasage limite est réglé par une butée "marker" variable en fonction du courant. Cet angle de déphasage limite sera par exemple égal à 155° C, de manière que la commutation du courant de court-circuit éventuel soit toujours possible.

Au contraire, les demi-ponts $A_2$, $B_2$, $C_2$ ont une commande commune donnant à vide un déphasage pratiquement identique, adapté au point de fonctionnement du four à arc. En effet, ces trois demi-ponts se trouvent connectés en parallèle et la répartition des courants impose qu'ils aient la même tension redressée, donc le même angle de déphasage. L'angle d'allumage retard sera supérieur à une valeur limite de 25° par exemple, ce qui permet d'atteindre une tension résultante nulle, sans imposer aux demi-ponts $A_1$, $B_1$, $C_1$ un déphasage supérieur à l'angle limite choisi de 155°, ce qui ferait apparaître un risque de défaut de commutation.

Les selfs de découplage 8, nécessaires pour conserver, même en cas de simultanéité d'allumage, une tension alternative commune suffisante pour amorcer, donnent également à la caractéristique individuelle tension/courant une pente qui assure déjà un équilibrage naturel des courants. Les selfs de lissage additionnelles 10 renforcent cet équilibrage dynamique. De plus, cet effet peut encore être accru en provoquant sur chacun des demi-ponts $A_2$, $B_2$, $C_2$ une chute de tension supplémentaire, par un déphasage complémentaire de la commande, fonction du courant débité par chaque groupe.

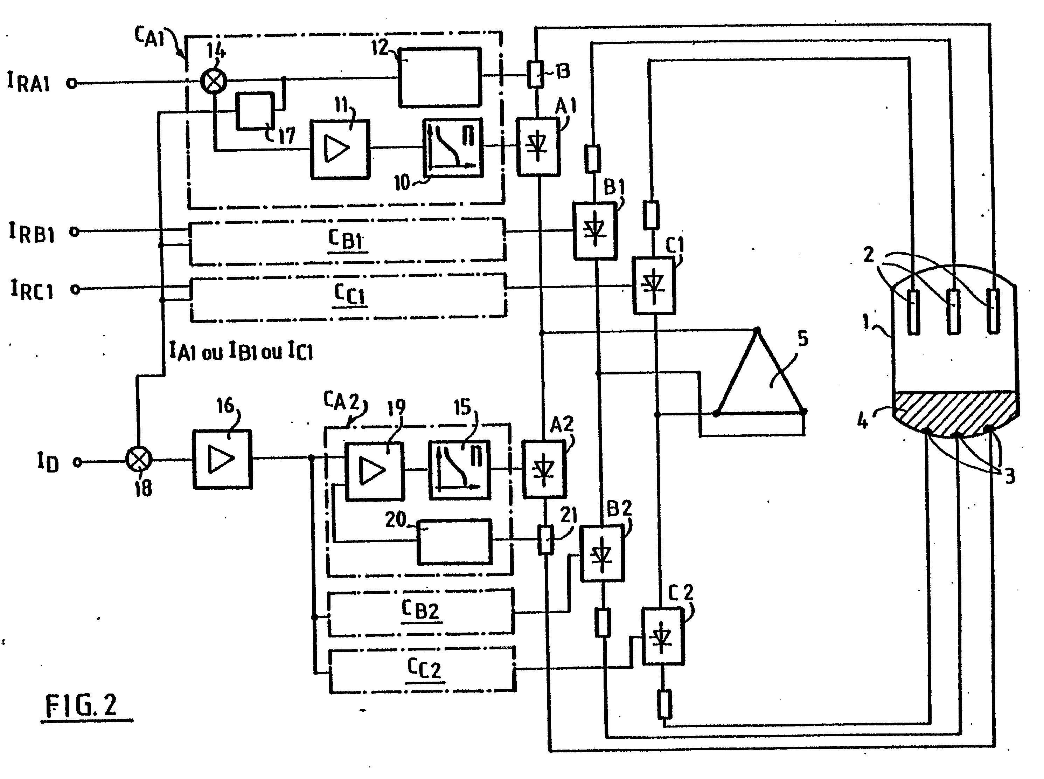

Le schéma de la figure 2 représente un exemple de réalisation d'un circuit de commande des différents convertisseurs A, B, C répondant aux exigences exposées ci-dessus.

Dans cet exemple de réalisation, chacun des demi-ponts $A_1$, $B_1$, $C_1$ est associé à un ensemble de commande, respectivement $C_{A1}$, $C_{B1}$, $C_{C1}$, comportant un déphaseur et générateur d'impulsion d'allumage individuel tel que 10, dont la tension de commande est issue d'un régulateur, par exemple de courant 11. Le signal de courant est mesuré sur chacune des barres de sortie alimentant les charges par un capteur tel que 12 associé à une sonde 13. Ce signal de courant est comparé au courant de référence $I_{RA1}$ de l'électrode correspondante par un comparateur 14 et l'écart est amplifié par le régulateur 11 afin de commander en conséquence le déphaseur 10.

Le réglage en régime normal du courant individuel issu des demi-ponts $A_1$, $B_1$, $C_1$ est donc sous la seule dépendance de ces ensembles de commande $C_{A1}$, $C_{B1}$ et $C_{C1}$. Quant aux demi-ponts $A_2$, $B_2$, $C_2$, ils sont également associés chacun à un ensemble de commande, respectivement $C_{A2}$, $C_{B2}$ et $C_{C2}$, comportant un déphaseur et générateur d'impulsion d'allumage individuel tel que 15. Toutefois, les trois déphaseurs sont, conformément à l'invention, soumis à une commande issue d'un même amplificateur de limitation de courant 16.

Le plus grand des courants $I_{A1}$, $I_{B1}$, $I_{C1}$ de toutes les charges est sélectionné au niveau des trois ensembles de commande $C_{A1}$, $C_{B1}$, $C_{C1}$ au moyen d'un dispositif tel que 17, pouvant être constitué d'ailleurs par une simple diode, et il est comparé dans un comparateur 18 à une valeur limite préaffichée dite courant de défaut $I_D$. L'écart est ensuite corrigé par l'amplificateur 16 qui retarde simultanément l'allumage des trois demi-ponts $A_2$, $B_2$, $C_2$ par l'intermédiaire des déphaseurs 15.

Par ailleurs, un amplificateur de correction tel que 19 peut avantageusement être placé en amont de chacun des déphaseurs 15, afin d'introduire une chute de tension fonction du courant débité par chaque groupe, grâce à un capteur de courant tel que 20 associé à une sonde 21. Plus précisément, cet amplificateur de correction 19 rajoute, par la variation de la commande du déphaseur 15 correspondant, une chute de tension complémentaire proportionnelle au courant débité par le groupe considéré.

Avec un tel circuit de commande, les demi-ponts $A_2$, $B_2$, $C_2$ délivrent une tension positive commune constante, dont la limite est fixée par l'angle retard minimum défini plus haut. La tension redressée appliquée à chaque électrode est ainsi la somme d'une tension positive commune et d'une tension positive ou négative. Elle peut donc varier de zéro à la tension maximum à tous les régimes d'intensité sans risque de défaut de commutation.

Au voisinage de la tension nulle ou de la tension moyenne, la consommation d'énergie réactive se trouve réduite, du fait du décalage des allumages. De plus, au voisinage de la tension nulle, la capacité nominale du transformateur est fortement accrue, du fait du passage diamétral du courant.

On notera en outre que l'association d'un deuxième dispositif d'alimentation analogue, alimentant d'autres charges au même point de fonctionnement, mais avec un couplage différent du transformateur apportant un décalage de 60° sur les tensions alternatives d'alimentation, permet de façon connue en soi une neutralisation des harmoniques de rang pair qui peuvent subsister avec un tel mode de commande.

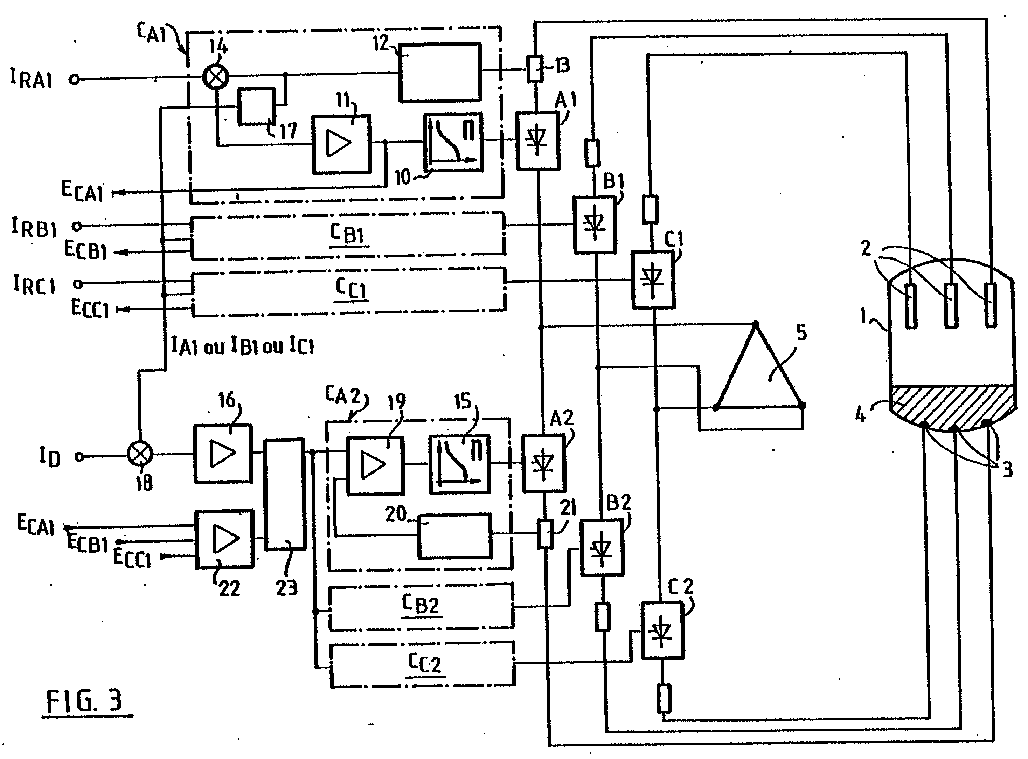

Dans la variante de réalisation représentée sur la figure 3, il y a en plus un opérateur de calcul 22 alimenté par les trois tensions de commande $E_{CA1}$, $E_{CB1}$ et $E_{CC1}$ des trois demi-ponts $A_1$, $B_1$, et $C_1$. Cet opérateur réalise une certaine fonction des trois tensions, par exemple leur moyenne arithmétique, et le signal ainsi obtenu est après filtrage appliqué simultanément aux trois ensembles de commande $C_{A2}$, $C_{B2}$, $C_{C2}$ par l'intermédiaire d'un sélecteur 23.

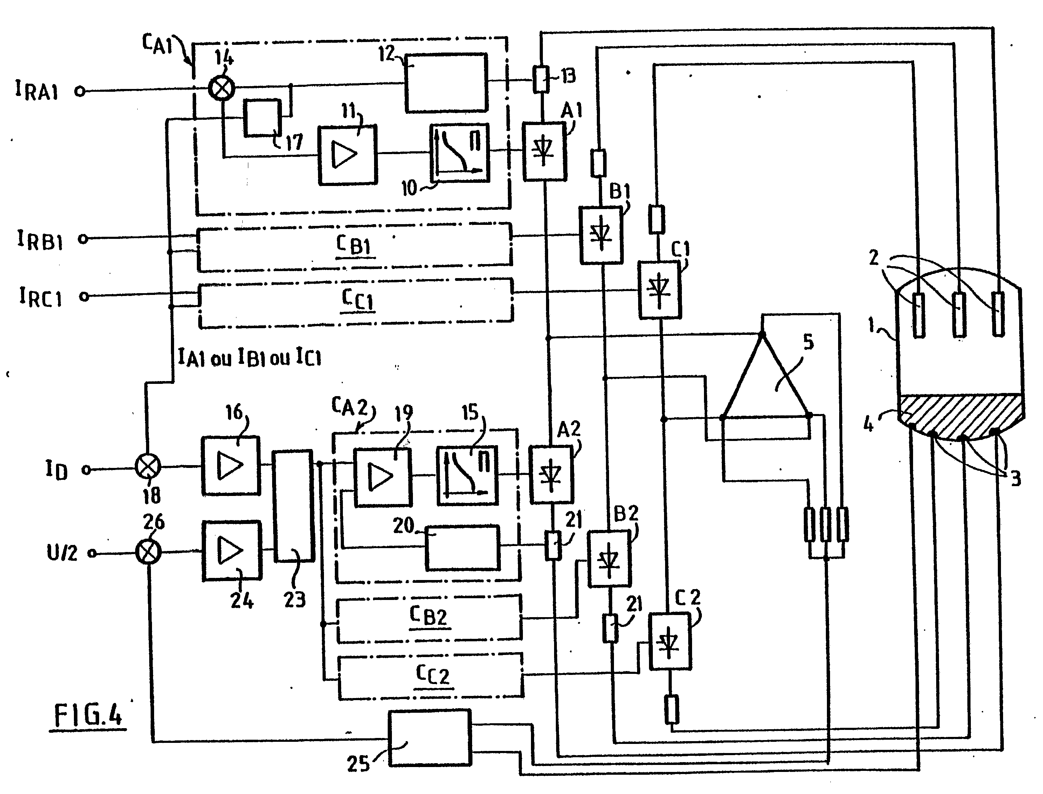

Dans l'autre variante de réalisation représentée sur la figure 4, l'opérateur de calcul 22 est remplacé par un régulateur 24 asservi en tension. La tension redressée issue des demi-ponts A₂, B₂, C₂ est mesurée par rapport au neutre réel du réseau d'alimentation secondaire ou par rapport au neutre reconstitué, comme ici lorsqu'il s'agit d'un secondaire en triangle, au moyen d'un capteur de tension 25, pour être comparée à la demi-référence de tension d'arc U/2 dans un comparateur 26. L'écart éventuel est ensuite corrigé par le régulateur de tension 24 qui délivre ainsi un signal de commande commune aux différents déphaseurs 15 par l'intermédiaire du sélecteur 23.

Dans ces deux derniers modes de réalisation, les demi-ponts A₂, B₂, C₂ ont une tension redressée commune, asservie pour être identique à la moyenne de la tension redressée des demi-ponts A₁, B₁, C₁. Le fonctionnement est alors quasi-hexaphasé en régime non perturbé, surtout si l'on tient compte des effets d'addition statistiques des harmoniques.

On notera par ailleurs que dans les trois modes de réalisation décrits, le fonctionnement en régime de défaut est identique. En régime de court-circuit sur la charge, l'action de la régulation sur le demi-pont A₁, B₁ ou C₁ de l'électrode en cause maintient le courant dans les limites normales et cette action est complétée au-delà d'un certain seuil de courant par un déphasage complémentaire des demi-ponts A₂, B₂, C₂, avec répercussion inévitable sur les trois alimentations.

## Revendications

1. Dispositif d'alimentation en courant continu d'au moins deux charges électriques, notamment pour l'alimentation d'un four à plusieurs électrodes ou de générateurs de plasmas, comprenant un ensemble de redresseurs contrôlés, disposés en pont de GRAETZ, en parallèle sur une alimentation alternative commune, les demi-ponts situés du côté de la polarité commune ayant une tension commune de commande de déphasage, ledit dispositif étant caractérisé en ce qu'il alimente au moins deux charges électriques ayant une polarité commune et comprend un ensemble de redresseurs contrôlés (7) par charge (2), les demi-ponts (A1, B1, C1) situés du côté opposé audit côté de la polarité commune étant commandés chacun par une régulation individuelle.

2. Dispositif d'alimentation selon la revendication 1, caractérisé en ce que la tension commune de commande de déphasage est normalement constante et ne varie qu'au-delà d'un seuil d'intensité prédéterminé.

3. Dispositif d'alimentation selon la revendication 1, caractérisé en ce que la tension commune de commande de déphasage est calculée à partir des tensions de commande des autres demi-ponts (A₁, B₁, C₁).

4. Dispositif d'alimentation selon la revendication 1, caractérisé en ce que la tension commune de commande de déphasage est calculée en fonction de l'écart entre la demi-référence de tension de la charge et la tension redressée commune mesurée à la sortie des demi-ponts (A₂, B₂, C₂).

5. Dispositif d'alimentation selon l'une quelconque des revendications 1 à 4, caractérisé en ce qu'une self de lissage (10) est placée en série avec chacun des demi-ponts (A₂, B₂, C₂) côté polarité commune.

6. Dispositif d'alimentation selon l'une quelconque des revendications 1 à 5, caractérisé en ce qu'une chute de tension individuelle, proportionelle à l'intensité, est prévue dans chacun des demi-ponts (A₂, B₂, C₂) côté polarité commune.

## Claims

A system for supply of direct current to at least two electrical loads, especially for power supply to an arc furnace with several elctrodes or to plasma generators, comprising a set of loadcontrolled rectifiers arranged in a GRAETZ bridge, in parallel upon a common alternating power supply, the half-bridges situated on the common-polarity side having a common dephasing control voltage, said system being characterized in that it supplies at least two electrical loads having a common polarity and comprises a set of controlled rectifiers (7) for each load (2), the half-bridges (A₁, B₁, C₁) situated on the side opposite the common-polarity side being each controlled individually.

2. A system according to claim 1, characterized in that the common dephasing control voltage is normally constant and varies only when a predetermined load current threshold is exceeded.

3. A system according to claim 1, characterized in that the common dephasing control voltage is calculated from the control voltages of the other half-bridges (A₁, B₁, C₁).

4. A system according to claim 1, characterized in that the common dephasing control voltage is calculated from the difference between the half-reference of the load voltage and the common rectified voltage coming from the half-bridges (A₂, B₂, C₂).

5. A system according to any of claims 1 to 4, characterized in that a smoothing coil is connected in series with each of the half-bridges (A₂, B₂, C₂) on the common polarity side.

6. A system according to any of claims 1 to 5, characterized in that an individual voltage drop, proportional to the intensity, is provided in each of the half-bridges (A₂, B₂, C₂) on the common polarity side.

## Patentansprüche

1. Vorrichtung zur Versorgung von wenigstens zwei elektrischen Lasten mit Gleichstrom, insbesondere für die Versorgung eines Ofens mit mehreren Elektroden oder von Plasma-Generatoren, mit einer Gruppe gesteuerter Gleichrichter, die parallel an einer gemeinsamen Wechselstromversorgung in GRAETZ-Brückenschaltung angeschlossen sind, wobei die auf der Seite der gemeinsamen Polarität angeordneten Halbbrücken eine gemeinsame Spannung zur Steuerung der Phasenverschiebung aufweisen, wobei die Vorrichtung dadurch gekennzeichnet ist, daß sie wenigstens zwei elektrische, eine gemelnsame Polarität aufweisende Lasten speist und eine Gruppe gesteuerter Gleichrichter (7) pro Last (2) umfaßt, wobei jede der Halbbrücken (A₁, B₁,

C₁), die sich auf der Seite befinden, welche von der Seite der gemeinsamen Polarität abgewandt ist, durch eine individuelle Regelung gesteuert wird.

2. Versorgungsvorrichtung nach Anspruch 1, dadurch gekennzeichnet, daß die gemeinsame Spannung zur Steuerung der Phasenverschiebung normalerweise konstant ist und nur oberhalb einer vorbestimmten Intensitätsschwelle variiert.

3. Versorgungsvorrichtung nach Anspruch 1, dadurch gekennzeichnet, daß die gemeinsame Spannung zur Steuerung der Phasenverschiebung ausgehend von den Spannungen zur Steuerung der anderen Halbbrücken (A₁, B₁, C₁) berechnet wird.

4. Versorgungsvorrichtung nach Anspruch 1, dadurch gekennzeichnet, daß die gemeinsame Spannung zur Steuerung der Phasenverschiebung in Abhängigkeit von der Abweichung zwischen der Halbreferenz der Spannung der Last und der gemeinsamen gleichgerichteten Spannung, die am Ausgang der Halbbrücken (A₂, B₂, C₂) gemessen wird, berechnet ist.

5. Versorgungsvorrichtung nach einem der Ansprüche 1 bis 4, dadurch gekennzeichnet, daß eine Glättungsinduktivität (10) mit jeder der Halbbrücken (A₂, B₂, C₂) auf der Seite der gemeinsamen Polarität in Serie geschaltet ist.

6. Versorgungsvorrichtung nach einem der Ansprüche 1 bis 5, dadurch gekennzeichnet, daß ein individueller Spannungsabfall, der zu der Intensität proportional ist, in jeder der Halbbrücken (A₂, B₂, C₂) auf der Seite der gemeinsamen Polarität vorgesehen ist.

FIG.1

EP 0 225 200 B1

FIG.2

FIG. 3

EP 0 225 200 B1

FIG.4

EP 0 225 200 B1